# DEMANDE DE BREVET EUROPEEN

(11) **EP 0 819 921 A1**
(43) Date de publication de la demande: **21.01.1998**
(21) Numéro de dépôt: 96202006.1
(22) Date de dépôt: 15.07.1996
(51) Int. Cl.: G01G 19/414, A01K 5/02

(54) **Dispositif de pesée en temps réel**

(71) Demandeur: SOCIETE DES PRODUITS NESTLE S.A., 1800 Vevey (CH)
(72) Inventeur: Enslen, Marc Y.A., 1400 Yverdon (CH); Roy, Michel, 1350 Orbe (CH); Trenel, Marc, F-77184 Emerainville (FR); Venet, Claudie, F-75019 Paris (FR)
(74) Mandataire: Thomas, Alain

(57) **Abrégé**

L'invention concerne un dispositif de pesée en temps réel, de manière à suivre et mesurer la prise d'aliments par des animaux familiers, comprenant dans un châssis (3), au moins un support (14) permettant de recevoir un récipient recevant la nourriture pour lesdits animaux familiers, au moins un capteur à jauge de contrainte (1) relié mécaniquement audit support et une carte électronique câblée avec ledit capteur (1) pour le stockage de l'information.

## Description

L'invention concerne un dispositif de pesée en temps réel, de manière à suivre la prise d'aliments par des animaux familiers.

Il n'existe pas à l'heure actuelle de dispositif de pesée en temps réel avec deux pesages, de conception simple, ayant une certaine autonomie , d'encombrement réduit et pouvant facilement être déplacé sans risque d'endommagement.

L'invention concerne un dispositif de pesée en temps réel, de manière à suivre la prise d'aliments par des animaux familiers, comprenant dans un châssis, au moins un support permettant de recevoir un récipient recevant la nourriture pour lesdits animaux familiers, au moins un capteur à jauge de contrainte relié mécaniquement audit support et une carte électronique câblée avec ledit capteur pour le stockage de l'information.

Le dispositif selon l'invention est destiné à déterminer les habitudes des propriétaires de chats ou autres animaux domestiques sur la distribution de nourriture ainsi que le comportement de l'animal par mémorisation de tous les événements qui seront mesurés sur le récipient destiné à la nourriture desdits animaux.

Dans ce but, le dispositif comprend une carte électronique pour le stockage de l'information constitué par au moins un convertisseur analogique numérique, le micro contrôleur et ses périphériques et un connecteur destiné à recevoir une carte mémoire.

Dans une forme de réalisation préférée du dispositif selon l'invention, celui-ci comprend deux supports permettant de recevoir un récipient, deux capteurs à jauge de contrainte et une carte électronique avec deux convertisseurs analogiques numériques. L'intérêt de cette réalisation est qu'elle permet de suivre simultanément ce qui se passe sur chaque récipient, de manière par exemple à faire des comparaisons entre deux produits différents.

Le principe de fonctionnement est le suivant : Le dispositif permet l'acquisition en temps réel de tout événement survenant sur chaque récipient de nourriture. Par événement, il convient de prendre en considération tout type de mouvement, de variation, d'accélération exercés sur le récipient de nourriture qui sera mesuré par le capteur à jauge de contrainte solidaire de ce récipient. Le capteur va traduire cette action sous forme de signal électrique. Le convertisseur analogique numérique transforme cette tension en information numérique et la transmet au micro-contrôleur oui la traite pour l'enregistrer dans la carte mémoire.

Pour le dispositif selon l'invention, toute action volontaire sur le ou les récipients est un événement. Il peut s'agir des actions suivantes :
- Enlèvement des récipients contenant la nourriture,
- Dépôt des récipients contenant la nourriture et
- Toute opération sur le ou les récipients qui se traduit par une augmentation ou une diminution de poids dans les récipients.

Lorqu'un événement a lieu sur un récipient, le dispositif enregistre la date et l'heure de départ de cet événement, le numéro du capteur à jauge qui est sollicité et le dernier poids stable mesuré par ledit capteur à jauge. Dès que cet événement prend fin, le dispositif enregistre la date et l'heure de la fin de l'événement, le numéro du capteur à jauge qui a été sollicité, avec le nouveau poids stable mesuré par le capteur à jauge. Cette nouvelle valeur de poids devient la référence poids de l'événement suivant.

Le dispositif selon l'invention dispose d'une batterie d'accumulateurs permettant d'alimenter l'ensemble électronique. Il est de ce fait totalement autonome pendant 5-6 jours. Il suffit ensuite de relier au secteur pour la recharge desdits accumulateurs. Le dispositif peut rester en test chez un particulier pendant 1 mois ou plus. A la fin du test, il suffit d'en extraire la carte mémoire et de traiter l'information y contenue. Dans une variante, il est également possible de prévoir une prise sur le dispositif selon l'invention pour se relier directement sur un PC. Un programme de gestion de la balance permet son paramétrage et la visualisation des événements.

On arrive à avoir un dispositif avec deux récipients très compact, par exemple de dimensions 40 cm, 30 cm et 7 cm de hauteur.

La suite de la description est faite maintenant en référence aus dessins sur lesquels :

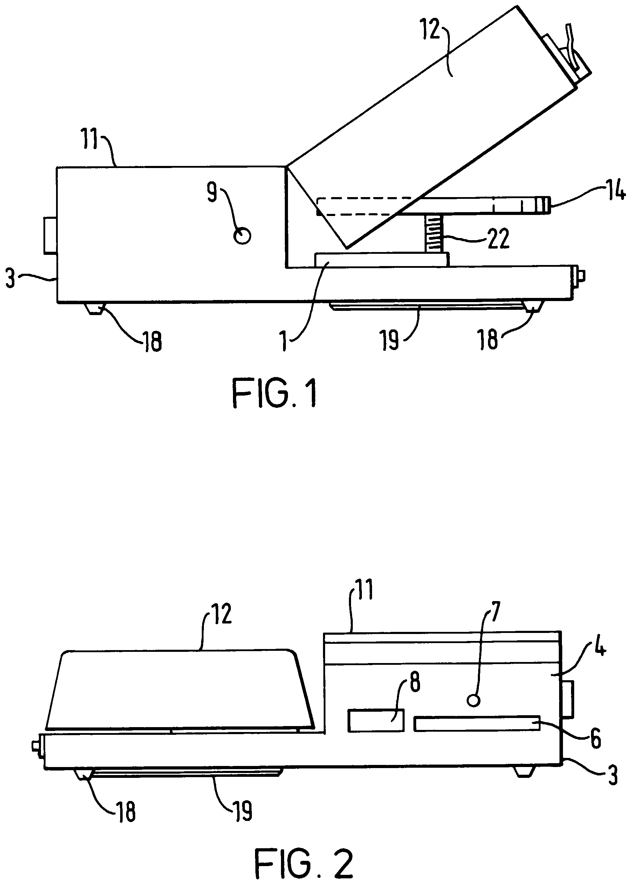

- Fig. 1: est une vue de côté, en position ouverte du dispositif,
- Fig. 2: est une vue de l'autre côté du même dispositif,

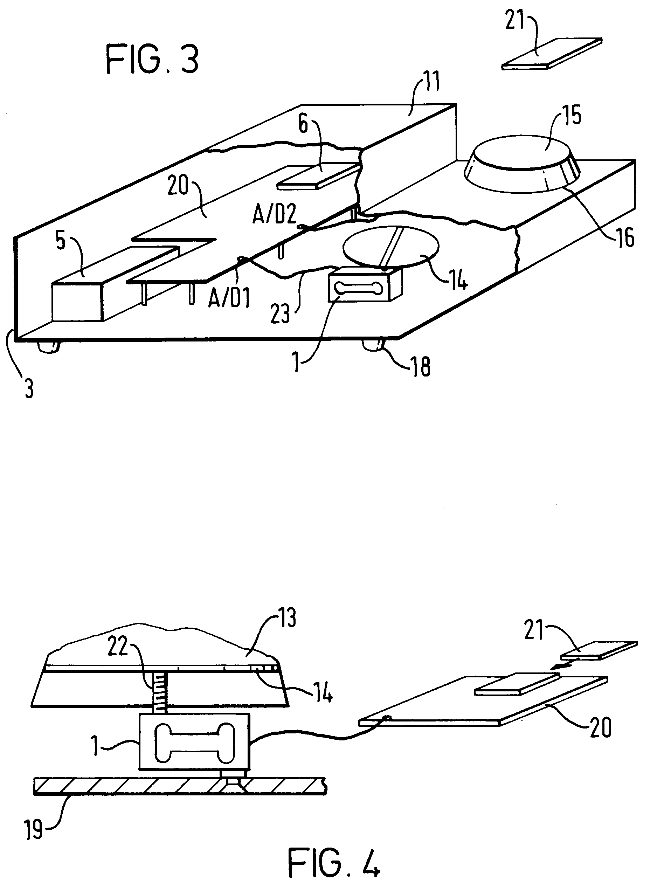

- Fig. 3: est une vue schématique éclatée du dispositif selon l'invention et
- Fig. 4: est une représentation schématique plus précise d'un capteur à jauge de contrainte.

Le dispositif se présente sous la forme d'une valise rectangulaire constitué de:
1- Un carter supérieur (11),
2- Un châssis (3) recevant les éléments suivants :
   * Quatre pieds (18).
   * Deux plaques renfort (19) pour les capteurs à jauge,
   * Deux ensembles capteurs à jauge (1,2),
   * Un support circulaire (14) qui assure le positionnement et la stabilité d'un premier récipient (13) recevant la nourriture et relié au capteur à jauge (1),
   * Un second support circulaire (16) qui assure le positionnement et la stabilité d'un second récipient (15) recevant la nourriture et relié au second capteur à jauge (2),
   * Une liaison mécanique (22), par exemple par vis permettant de relier les supports (14,16) à leur capteur à jauge correspondant (1,2),
   * Une batterie d'accumulateurs (5),
   * Une carte électronique câblée (20) relié en (23) aux capteurs à jauge (1,2) et constitué de :
      - Une unité numérique pilotée par un micro-contrôleur avec tous ses périphériques,
      - Un convertisseur analogique numérique A/D1 pour le premier récipient,
      - Un convertisseur analogique numérique A/D2 pour le second récipient et
      - Un système de contrôle permanent de la tension des accumulateurs (5) pour l'alimentation du circuit imprimé et des éléments de sauvegarde des informations stockées dans la carte mémoire (21).
3- Sur le côté, une porte articulée (4), maintenue fermée par un ressort donnant accès aux éléments suivants :
   * Un connecteur avec éjecteur (6) destiné à recevoir la carte mémoire (21),
   * Une prise (8) compatible PC et
   * Un témoin (7) de mise sous tension.
4- De l'autre côté, une embase (9) destinée à recevoir un chargeur externe (non représenté) et
5- Une porte démontable (12) donnant accès aux deux récipients destinés à la nourriture du chat.

Le fonctionnement du dispositif selon l'invention est le suivant : On pose le dispositif sur une surface plane en s'assurant que celui-ci est stable. Après avoir enlevé le couvercle (12) et avoir vérifié la mise en place des deux récipients vides (13) et (15) sur leurs supports respectifs (14) et (16), on introduit la carte mémoire (21) dans son connecteur (6) pour la mise sous tension. Cette mise sous tension est visualisée par l'éclairement du témoin lumineux (7).

Le dispositif procède alors à la mise à zéro des deux capteurs à jauge (1,2), le poids mesuré est alors nul et correspond au poids des récipients vides.

Le dispositif procède à l'enregistrement des éléments suivants et les stocke dans la carte mémoire (21) :
- Date sous le format jour/mois/année,
- Heure sous le format heure/minute/seconde,
- La valeur du pesage No. 1 sous le format 10000 et
- La valeur du pesage No. 2 sous le format 20000.

Ces enregistrements constituent l'origine de tous les événements futurs. Le dispositif est ainsi prêt à être utilisé.

L'utilisateur enlève le premier récipient (13) et/ou le second récipient (15) afin de les remplir de nourriture, cette action est mémorisée événement 1.

L'utilisateur repose le premier récipient (13) et/ou le second récipient (15) sur les supporte respectifs (14) et/ou (16), cette action est mémorisée événement 2.

Le chat s'approche du dispositif et effectue son choix de nourriture (cas où les deux récipients sont remplis ) et commence à manger dans un des deux récipients (13) ou (15). Le capteur à jauge de contrainte (1) ou (2) correspondant à ce récipient est sollicité. Le capteur à jauge va traduire cette action physique sous forme de signal électrique. Cette tension est présentée à l'entrée du convertisseur analogique numérique A/D1 ou A/D2, de la carte électronique (20). Le convertisseur transforme cette tension en information numérique et la transmet au micro-contrôleur. Cette valeur numérique est traitée pour être enregistrée dans la carte mémoire (21) avec les informations date et heure. Cette action est mémorisée événement 3.

Le chat s'arrête de manger, cette action est mémorisée événement 4. A chaque intervention de l'utilisateur ou du chat sur les récipients, quelle que soit l'heure du jour ou de la nuit, les événements sont mémorisés dans la carte de sauvegarde (21). Chaque événement est enregistré au moment précis où il se produit.

Le dispositif selon l'invention enregistre tous les événements qui se traduisent par un changement de la valeur du poids mesuré dans chaque récipient.

Chaque variation qui se traduit par une nouvelle valeur de poids mesurée sur le premier capteur à jauge de contrainte provoque un enregistrement des valeurs date, heure, quantité consommée dans le premier récipient et valeur du poids qui reste dans ledit récipient.

Chaque variation qui se traduit par une nouvelle valeur de poids mesurée sur le second capteur à jauge de contrainte provoque un enregistrement des valeurs date, heure, quantité consommée dans le second récipient et valeur du poids qui reste dans ledit récipient.

Des variations intempestives correspondant à des mesures de courant d'air, un appui sur le récipient, un soulèvement du récipient ou toute autre manipulation qui à son terme ne se traduit pas par une valeur de poids différente de la mesure de poids de départ, n'est pas enregistrée dans la carte mémoire (21).

Il est bien entendu qu'au lieu d'avoir deux supports (14,16), on peut en avoir trois ou davantage, suivant le nombre de comparaison que l'on souhaite faire avec l'animal domestique considéré.

## Revendications

1. Dispositif de pesée en temps réel, de manière à suivre et mesurer la prise d'aliments par des animaux familiers, comprenant dans un châssis, au moins un support permettant de recevoir un récipient recevant la nourriture pour lesdits animaux familiers, au moins un capteur à jauge de contrainte relié mécaniquement audit support et une carte électronique câblée avec ledit capteur pour le stockage de l'information.

2. Dispositif de pesée en continu selon la revendication 1, dans lequel la carte électronique câblée est constitué par au moins un convertisseur analogique numérique, le micro contrôleur et ses périphériques et un connecteur destiné à recevoir une carte mémoire.

3. Dispositif de pesée en continu selon l'une des revendications 1 ou 2, comportant deux supports permettant de recevoir un récipient, deux capteurs à jauge de contrainte et une carte électronique avec deux convertisseurs analogiques numériques.

4. Dispositif selon l'une des revendications 1 à 3, dans lequel une batterie d'accumulateurs permet d'alimenter l'ensemble électronique.
